# EUROPEAN PATENT APPLICATION

(11) **EP 2 849 025 A1**
(43) Date of publication of application: **18.03.2015**
(21) Application number: 13833229.1
(22) Date of filing: 26.08.2013
(51) Int. Cl.: G06F 3/01

(54) **AN ERROR OPERATION PREVENTING METHOD, APPARATUS AND DEVICE**

(30) Priority: 30.08.2012 CN 201210316613
(71) Applicant: Xiaomi Inc., Beijing 100085 (CN)
(72) Inventor: LI, Shen, Beijing 100085 (CN); WANG, Wenlin, Beijing 100085 (CN); LI, Weixing, Beijing 100085 (CN)
(74) Representative: Hanna, Peter William Derek
(86) International application number: PCT/CN2013/082260
(87) International publication number: WO 2014/032554

(57) **Abstract**

An error operation preventing method, apparatus and device are disclosed in the present invention, which are related to the field of mobile terminal. The error operation preventing method, apparatus and device, provided by embodiments of the present invention, monitor a first distance between a mobile terminal and the surrounding environment in real-time after the mobile terminal gets into an active state from a standby state, and determines whether the mobile terminal is put away or not by user (put in a backpack or pocket for example); when the first distance satisfies a preset distance condition, the mobile terminal can be regarded as in the state of put away by user, closes a touch screen of the mobile terminal and forbids the touch screen for preventing error operation to the mobile in the active state by user, so that the damage caused by error operation can be avoided.

## Description

### TECHNICAL FIELD

The present disclosure relates to the field of mobile terminal, and particularly, to a method, an apparatus and a device for preventing a misoperation.

### BACKGROUND

As the touch technology rapidly develops, mobile terminals with touch screens, such as mobile phones, tablet computers and the like, are widely utilized in daily life. Users may control the mobile terminals through the touch screens thereof, which enriches and personalizes the interaction manners.

Since operations of the mobile terminals may be completed through simple actions of touches, misoperations tend to occur to the mobile terminals which utilize the touch technology. For example, a user may carry with him a mobile terminal and put it in his pocket, a purse or the like. When the user is in activity, a power key of the mobile terminal may be accidently touched to light up the touch screen of the mobile terminal, and enable the mobile terminal to receive touch event, which may lead to unexpected misoperations and bring about loss for the user.

Currently, some mobile terminals support locking screens, and users have to perform predetermined unlocking operations to unlock the locked screen, so as to resume normal use of the mobile terminals.

Although such a manner for preventing a misoperation through locking the screen may reduce the risk of misoperations to some extent, it cannot achieve the purpose of preventing misoperations after the mobile phone enters an active state from a standby state. For example, upon receiving an incoming call or an alarm prompt, most mobile phones will automatically hide the locked screen and directly display the incoming call interface or the alarm prompt interface in order to facilitate quick response of the user, in which case, the locking screen mechanism cannot be utilized to prevent misopeations.

### SUMMARY

Embodiments of the present disclosure provide a method, an apparatus and a device for preventing a misoperation, which may prevent a possible misoperation after a mobile terminal enters an active state from a standby state.

There is provided a method for preventing a misoperation, the method being used after a mobile terminal enters an active state from a standby state, and the method including:
monitoring in real time a first distance between the mobile terminal and surroundings; and
shutting down a touch screen of the mobile terminal and disabling the touch screen when the first distance satisfies a preset distance condition.

There is provided an apparatus for preventing a misoperation, the apparatus being used after a mobile terminal enters an active state from a standby state, and the apparatus including:
a monitoring module, configured to monitor in real time a first distance between the mobile terminal and surroundings; and
a shutdown module, configured to shut down a touch screen of the mobile terminal and disable the touch screen when the first distance monitored by the monitoring module satisfies a preset distance condition.

There is provided a device, including:
a touch screen;
one or more processors;
a memory; and
one or more modules stored in the memory and configured to be executed by the one or more processors, wherein, the one or more modules have the following functions:
monitoring in real time a first distance between the device and surroundings; and
shutting down the touch screen and disabling the touch screen when the monitored first distance satisfies a preset distance condition.

The advantageous effects of embodiments of the present disclosure include:

Through the above method, apparatus and device for preventing a misoperation provided by embodiments of the present disclosure, operation of monitoring in real time the first distance between the mobile terminal and the surroundings is enabled after the mobile terminal enters the active state from the standby state, to determine whether the mobile terminal has been put away (for example, put in a backpack or a pocket) by the user. When the first distance satisfies the preset distance condition, it may be regarded that the mobile terminal has been put away by the user, and then the touch screen of the mobile terminal is shut down and disabled, so as to prevent a misoperation on the mobile terminal due to the user's activity, so that damages due to the misoperation may be avoided.

### BRIEF DESCRIPTION OF THE DRAWINGS

Fig.1 is a flow chart showing a method for preventing a misoperation according to an embodiment of the present disclosure;
Fig.2 is a flow chart showing another method for preventing a misoperation according to an embodiment of the present disclosure;
Fig.3 is a structural diagram showing an apparatus for preventing a misoperation according to an embodiment of the present disclosure;
Fig.4 is a structural diagram showing a shutdown module in an apparatus for preventing a misoperation according to an embodiment of the present disclosure;
Fig.5 is a second structural diagram showing an apparatus for preventing a misoperation according to an embodiment of the present disclosure; and
Fig.6 is a third structural diagram showing an apparatus for preventing a misoperation according to an embodiment of the present disclosure.

### DETAILED DESCRIPTION

Hereinafter, specific implementations of a method, an apparatus and a device for preventing a misoperation provided by embodiments of the present disclosure will be described in detail with reference to the accompany drawings.

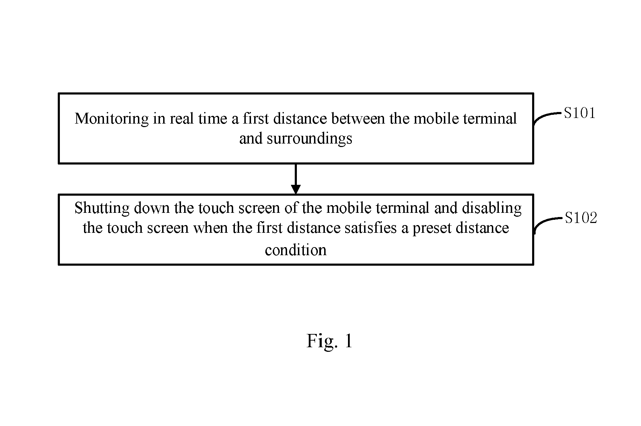

Firstly, as shown in Fig.1, a method for preventing a misoperation provided by an embodiment of the present disclosure is used after a mobile terminal enters an active state from a standby state. The method includes the following steps.

In step S101, a first distance between the mobile terminal and surroundings is monitored in real time.

This step S101 may be specifically:
monitoring in real time a first distance between a touch screen of the mobile terminal and a closest object in front of the touch screen.

In step S102, the touch screen of the mobile terminal is shut down and disabled when the first distance satisfies a preset distance condition.

The above shutting down and disabling the touch screen of the mobile terminal specifically includes:

causing the mobile terminal to enter a screen shut down state predefined by an operation system of the mobile terminal, and reporting a reason of entering the screen shut down state to the operation system of the mobile terminal, so as to facilitate the operation system of the mobile terminal to determine, based on the reason of entering the screen shut down state, whether a control command issued by a user through means other than the touch screen is executable.

Further, when the first distance does not satisfy the preset distance condition, the method further includes:
enabling the touch screen of the mobile terminal.

After the touch screen of the mobile terminal is enabled, the method further includes:
resuming monitoring the first distance from the closest object to the touch screen of a mobile phone, and when the first distance becomes satisfying the preset distance condition again, determining whether a time period during which the first distance keeps satisfying the preset distance condition reaches a preset first time period;
if the time period during which the first distance keeps satisfying the preset distance condition does not reach the preset first time period, stopping the operation of monitoring in real time the first distance between the mobile terminal and the surroundings; and
if the time period during which the first distance keeps satisfying the preset distance condition reaches the preset first time period, shutting down the touch screen of the mobile terminal and disabling the touch screen.
It should be noted that, in this embodiment, the above preset distance condition includes:
the first distance is less than a preset second distance;
or,
the first distance is less than or equals to the preset second distance.

Through the above method for preventing a misoperation provided by an embodiment of the present disclosure, operation of monitoring in real time the first distance between the mobile terminal and the surroundings is enabled after the mobile terminal enters the active state from the standby state, to determine whether the mobile terminal has been put away (for example, put in a backpack or a pocket) by the user. When the first distance satisfies the preset distance condition, it may be regarded that the mobile terminal has been put away by the user, and then the touch screen of the mobile terminal is shut down and disabled, so as to prevent a misoperation on the mobile terminal due to the user's activity, so that damages due to the misoperation may be avoided.

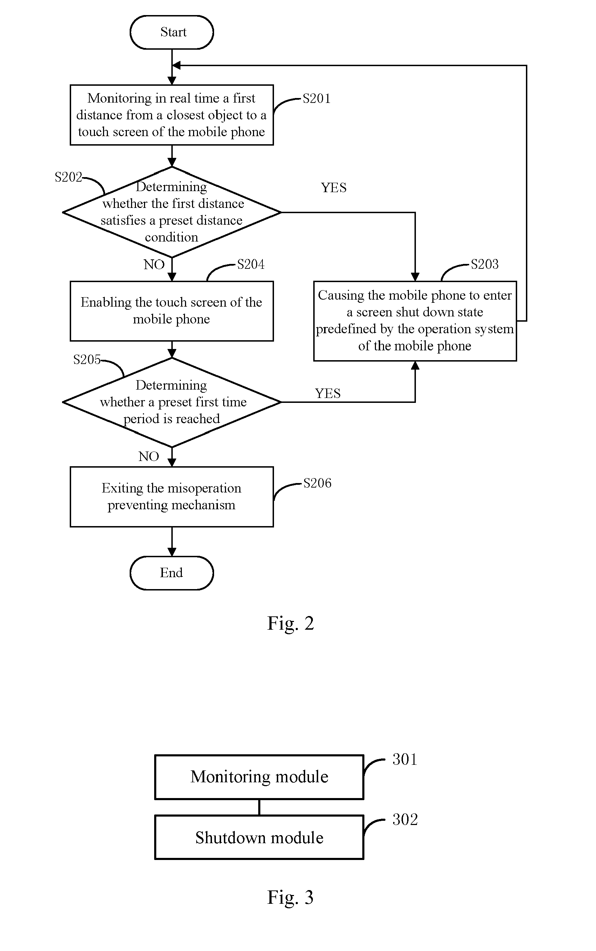

As shown in Fig.2, another method for preventing a misoperation is also provided by an embodiment of the present disclosure. The mobile terminal is, for example, a mobile phone, and this method may provide a misoperation preventing mechanism to the user and may be built in an operation system, or installed in the mobile phone in form of an APP (Application, a third party application program); and when the user enables the misoperation preventing mechanism, the following operations are executed after the mobile phone of the user enters an active state from a standby state.

In step S201, a first distance from a closest object to a touch screen of the mobile phone is monitored in real time.

In this embodiment, the mobile phone is, for example, a mobile phone, however, in the present disclosure, the mobile terminal is not limited to a mobile phone, and may also include a tablet computer, a MP4 and other devices with touch screens.

In this embodiment, the active state of the mobile phone may be an incoming call, an alarm ring bell, a schedule prompt or the like.

Specifically, the first distance from the closest object to the touch screen of the mobile phone may be obtained by measuring distance through an infrared distance sensor installed in the mobile phone, and an apparatus for preventing a misoperation may call a corresponding interface of the infrared distance sensor provided by the operation system to obtain the first distance.

It should be noted that, since the infrared distance sensor is generally installed at the same side as the touch screen of the mobile phone, the closest object to the touch screen of the mobile phone refers to an object in front of the touch screen of the mobile phone.

In step S202, it is determined whether the first distance satisfies a preset distance condition; if it satisfies, step S203 is performed, and if it does not satisfy, step S204 is performed.

Specifically, in this embodiment, the preset distance condition includes:
the first distance is less than a preset second distance;
or,
the first distance is less than or equals to the preset second distance.

The second distance may be set by the user or the developer, and may be set to, for example, 5 centimeters.

It should be noted that, the method provided by this embodiment is mainly used to prevent the mobile phone from being touched and operated accidently after it enters the active state, in the case where the mobile phone has been put away (for example, put in a backpack or a pocket) by the user. Therefore, the method provided by this embodiment assumes that when the first distance satisfies the preset distance condition, it may be regarded that the mobile phone has been put away by the user, and at this time, the user should not issue a control command through the touch screen of the mobile phone; and when the first distance does not satisfy the preset distance condition, it may be regarded that the mobile phone has been taken out by the user from the backpack or the pocket, and the user may issue a control command through the touch screen of the mobile phone.

In step S203, the mobile phone is caused to enter a screen shut down state predefined by the operation system of the mobile phone, and the process returns to step S201.

It should be noted that, the operation system of the mobile phone will configure a screen shut down state for the mobile phone, and define states of hardwares and a response to a control command input by the user in various manners, after the mobile phone enters the screen shut down state. The user or a program may cause the mobile phone to enter the screen shut down state through the interface provided by the operation system. In general, the mobile phone entering the screen shut down state at least includes shutting down and disabling the touch screen.

Further, in the screen shut down state of the operation system, reasons of entering the screen shut down state may include many types. For each type of the reasons of entering the screen shut down state, an operative state of the mobile phone corresponding to the screen shut down state may be different. For example, when the mobile phone enters the screen shut down state due to a screen locking operation by the user, the touch screen of the mobile phone is shut down, and is disabled (i.e., it cannot receive a control command issued by the user through the touch screen), but the mobile phone may receive an operation command issued by the user through a wire controller and execute the operation command.

Accordingly, when the mobile phone is caused to enter the screen shut down state predefined by the operation system of the mobile phone, the method further includes:
reporting a reason of entering the screen shut down state to the operation system of the mobile phone.

Still further, an operative state of the mobile phone corresponding to each type of screen shut down state predefined by the operation system, may be set in the operation system of the mobile phone.

In step S204, the touch screen of the mobile phone is enabled, and step S205 is performed.

Specifically, enabling the touch screen of the mobile phone includes:
lighting up and activating the touch screen of the mobile phone, and enabling the mobile phone to receive and execute a control command issued by the user through the touch screen of the mobile phone.

In step S205, it is to resume monitoring the first distance from the closest object to the touch screen of the mobile phone; when the first distance becomes satisfying the preset distance condition again, it is determined whether a time period during which the first distance keeps satisfying the preset distance condition reaches a preset first time period; if it does not reach the preset first time period, step S206 is performed; and if it reaches the preset first time period, the process returns to step S203.

The first time period may be preset by the developer or the user, and may be set to, for example, 1 second.

It should be noted that, the operation of this step is to prevent the case where the mobile phone of the user is subject to a significant change of positions in the backpack while the user is performing activity drastically, and the mobile phone mistakes it as the user has taken the mobile phone out of the backpack.

In step S206, misoperation preventing mechanism is exited.

Specifically, exiting the misoperation preventing mechanism includes: stopping the operation of monitoring in real time the first distance from the closest object to the touch screen of the mobile phone.

Furthermore, the method may further include:
exiting the misoperation preventing mechanism after the mobile phone enters a standby state (for example, no operation timing out, hanging up by the other party, alarm ceasing, and the like).

Through the above method for preventing a misoperation provided by an embodiment of the present disclosure, operation of monitoring in real time the first distance from the closest object to the touch screen of the mobile phone is enabled after the mobile phone enters the active state from the standby state, to determine whether the mobile phone has been put away (for example, put in a backpack or a pocket) by the user. When the first distance satisfies the preset distance condition, it may be regarded that the mobile phone has been put away and placed in position, so the user will not issue a touch command through the touch screen of the mobile phone, and then the touch screen of the mobile phone is shut down and disabled, so as to prevent a misoperation on the mobile phone which has been put away and enters the active state due to the user's activity, so that damages due to the misoperation may be avoided.

As shown in Fig.3, an embodiment of the present disclosure also provides an apparatus for preventing a misoperation, which is used after a mobile terminal enters an active state from a standby state. The apparatus includes:
a monitoring module 301, configured to monitor in real time a first distance between the mobile terminal and surroundings; and
a shutdown module 302, configured to shut down the touch screen of the mobile terminal and disable the touch screen when the first distance monitored by the monitoring module 301 satisfies a preset distance condition.

Further, the above monitoring module 301 is specifically configured to monitor in real time the first distance between a touch screen of the mobile terminal and a closest object in front of the touch screen.

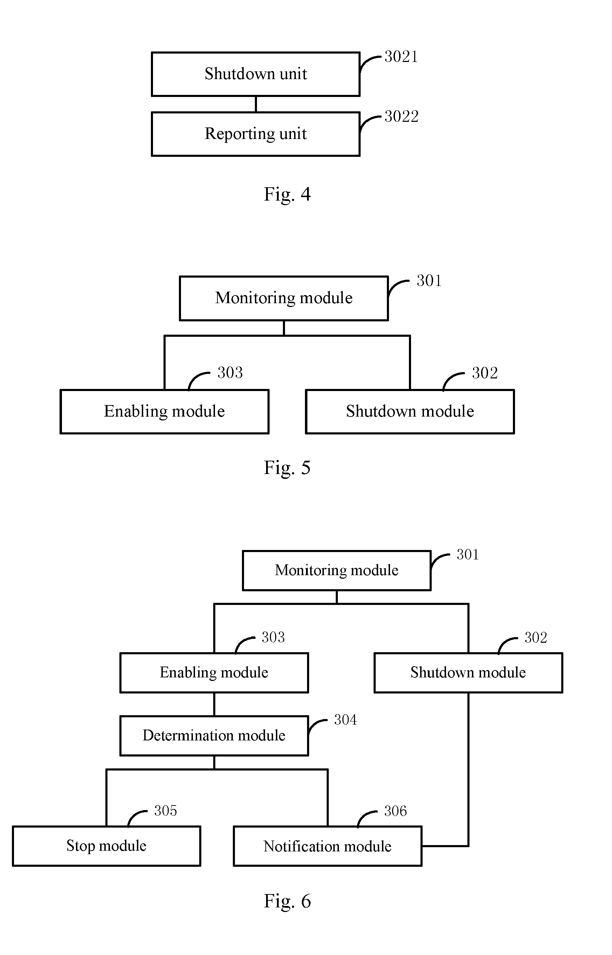

Further, as shown in Fig.4, the shutdown module 302 specifically includes:
a shutdown unit 3021, configured to cause the mobile terminal to enter a screen shut down state predefined by an operation system of the mobile terminal, when the first distance monitored by the monitoring module 301 satisfies the preset distance condition; and
a reporting unit 3022, configured to report a reason of entering the screen shut down state to the operation system of the mobile terminal, so as to facilitate the operation system of the mobile terminal to determine, based on the reason of entering the screen shut down state, whether a control command issued by a user through means other than the touch screen is executable.

Further, as shown in Fig.5, the above apparatus further includes:
an enabling module 303, configured to enable the touch screen of the mobile terminal when the first distance monitored by the monitoring module 301 does not satisfy the preset distance condition.

Further, as shown in Fig.6, the above apparatus further includes:
a determination module 304, configured to resume monitoring the first distance from the closest object to the touch screen of the mobile phone after the enabling module 303 enables the touch screen of the mobile terminal, and to determine, when the first distance becomes satisfying the preset distance condition again, whether a time period during which the first distance keeps satisfying the preset distance condition reaches a preset first time period;
a stop module 305, configured to stop the operation of monitoring in real time the first distance between the mobile terminal and the surroundings, if the determination module 304 determines that the time period during which the first distance keeps satisfying the preset distance condition does not reach the preset first time period; and
a notification module 306, configured to notify the shutdown module to perform operations of shutting down the touch screen of the mobile terminal and disabling the touch screen, if the determination module 304 determines that the time period during which the first distance keeps satisfying the preset distance condition reaches the preset first time period.

Further, the above preset distance condition specifically includes:
the first distance is less than a preset second distance;
or,
the first distance is less than or equals to the preset second distance.

Through the above apparatus for preventing a misoperation provided by an embodiment of the present disclosure, operation of monitoring in real time the first distance between the mobile terminal and the surroundings is enabled after the mobile terminal enters the active state from the standby state, to determine whether the mobile terminal has been put away (for example, put in a backpack or a pocket) by the user. When the first distance satisfies the preset distance condition, it may be regarded that the mobile terminal has been put away by the user, and then the touch screen of the mobile terminal is shut down and disabled, so as to prevent a misoperation on the mobile terminal due to the user's activity, so that damages due to the misoperation may be avoided.

In addition, an embodiment of the present disclosure also provides a device, including:
a touch screen;
one or more processors;
a memory; and
one or more modules stored in the memory and configured to be executed by the one or more processors, wherein, the one or more modules have the following functions:
monitoring in real time a first distance between the device and surroundings; and
shutting down the touch screen and disabling the touch screen when the monitored first distance satisfies a preset distance condition.

Further, the monitoring in real time a first distance between the device and surroundings, specifically is monitoring in real time a first distance between the touch screen and a closest object in front of the touch screen.

Further, the shutting down the touch screen and disabling the touch screen, specifically includes:

causing the device to enter a screen shut down state predefined by an operation system of the device, when the monitored first distance satisfies the preset distance condition; and

reporting a reason of entering the screen shut down state to the operation system of the device, so as to facilitate the operation system of the device to determine, based on the reason of entering the screen shut down state, whether a control command issued by a user through means other than the touch screen is executable.

Further, the one or more modules may also include the following function:
enabling the touch screen when the monitored first distance does not satisfy the preset distance condition.

Further, the one or more modules may also include the following function:
resuming monitoring the first distance from the closest object to the touch screen of the mobile phone after the touch screen is enabled, and determining, when the first distance becomes satisfying the preset distance condition again, whether a time period during which the first distance keeps satisfying the preset distance condition reaches a preset first time period;
stopping the operation of monitoring in real time the first distance between the device and the surroundings, if it is determined that the time period during which the first distance keeps satisfying the preset distance condition does not reach the preset first time period; and
performing operations of shutting down the touch screen and disabling the touch screen, if it is determined that the time period during which the first distance keeps satisfying the preset distance condition reaches the preset first time period.

Further, the above preset distance condition specifically includes:
the first distance is less than a preset second distance;
or,
the first distance is less than or equals to the preset second distance.

Through the above device provided by an embodiment of the present disclosure, operation of monitoring in real time the first distance between the device and the surroundings is enabled after the device enters the active state from the standby state, to determine whether the device has been put away (for example, put in a backpack or a pocket) by the user. When the first distance satisfies the preset distance condition, it may be regarded that the device has been put away by the user, and then the touch screen is shut down and disabled, so as to prevent a misoperation on the device due to the user's activity, so that damages due to the misoperation may be avoided.

In addition, an embodiment of the present disclosure also provides a nonvolatile readable storage medium, in which one or more modules are stored. When being applied in a device with a touch screen, the one or more modules may cause the device to have the following functions:
monitoring in real time a first distance between the device and surroundings; and
shutting down the touch screen and disabling the touch screen when the monitored first distance satisfies a preset distance condition.

Further, the monitoring in real time a first distance between the device and surroundings, specifically is monitoring in real time a first distance between the touch screen and a closest object in front of the touch screen.

Further, the shutting down the touch screen and disabling the touch screen, specifically include:
causing the device to enter a screen shut down state predefined by an operation system of the device, when the monitored first distance satisfies the preset distance condition; and
reporting a reason of entering the screen shut down state to the operation system of the device, so as to facilitate the operation system of the device to determine, based on the reason of entering the screen shut down state, whether a control command issued by a user through means other than the touch screen is executable.

Further, the one or more modules may also include the following function:
enabling the touch screen when the monitored first distance does not satisfy the preset distance condition.

Further, the one or more modules may also include the following function:
resuming monitoring the first distance from the closest object to the touch screen of the mobile phone after the touch screen is enabled, and determining, when the first distance becomes satisfying the preset distance condition again, whether a time period during which the first distance keeps satisfying the preset distance condition reaches a preset first time period;
stopping the operation of monitoring in real time the first distance between the device and the surroundings, if it is determined that the time period during which the first distance keeps satisfying the preset distance condition does not reach the preset first time period; and
performing operations of shutting down the touch screen and disabling the touch screen, if it is determined that the time period during which the first distance keeps satisfying the preset distance condition reaches the preset first time period.

Further, the above preset distance condition specifically includes:
the first distance is less than a preset second distance;
or,
the first distance is less than or equals to the preset second distance.

The above storage medium provided by an embodiment of the present disclosure includes one or more modules, and when the one or more modules are executed in a device with a touch screen, the one or more modules may cause the device to enable the operation of monitoring in real time the first distance between the device and the surroundings after the device enters the active state from the standby state, to determine whether the device has been put away (for example, put in a backpack or a pocket) by the user. When the first distance satisfies the preset distance condition, it may be regarded that the device has been put away by the user, and then the touch screen is shut down and disabled, so as to prevent a misoperation on the device due to the user's activity, so that damages due to the misoperation may be avoided.

Through the above description to the embodiments, it can be clearly understood by those skilled in the art that, the embodiments of the present disclosure may be implemented by hardware, or by software working with necessary common hardware platform. Based on this understanding, the technical solutions of the embodiments of the present disclosure may be embodied in form of software product which may be stored in a non-volatile storage medium (such as CD-ROM, flash disk, or mobile hard disk, etc.) and which may include a series of instructions to enable a computer device (such as personal computer, server, or network device, etc.) to implement the methods described in the embodiments of the present disclosure.

It can be understood by those skilled in the art that, the appended drawings are only illustrative diagrams for the preferred embodiments, and the modules or the procedures in these drawings may not be necessary for implementing the present disclosure.

It can be understood by those skilled in the art that, the modules in an device of the embodiment may be distributed in the device of the embodiment according to the description of the embodiment, or may be correspondingly varied to be contained in one or more devices other than that of the embodiment. The modules in the above embodiments may be combined as one module, or may be further divided into several sub-modules.

The aforementioned sequence numbers of the embodiments of the present disclosure are merely for description purpose, not relating to showing the superiority or inferiority of the embodiments.

It is apparent that those skilled in the art may make various modifications and variations to the present disclosure without departing from the spirit and scope of the present disclosure. Accordingly, if such modifications and variations fall within the scope of the claims of the present application or equivalents thereof, the present application intends to embrace such modifications and variations.

## Claims

1. A method for preventing a misoperation, the method being used after a mobile terminal enters an active state from a standby state, and the method comprising:
monitoring in real time a first distance between the mobile terminal and surroundings;
and
shutting down a touch screen of the mobile terminal and disabling the touch screen when the first distance satisfies a preset distance condition.

2. The method according to claim 1, wherein, said monitoring in real time a first distance between the mobile terminal and surroundings, specifically comprises:
monitoring in real time the first distance between the touch screen of the mobile terminal and a closest object in front of the touch screen.

3. The method according to claim 1, wherein, said shutting down a touch screen of the mobile terminal and disabling the touch screen, specifically comprises:
causing the mobile terminal to enter a screen shut down state predefined by an operation system of the mobile terminal; and
reporting a reason of entering the screen shut down state to the operation system of the mobile terminal, so as to facilitate the operation system of the mobile terminal to determine, based on the reason of entering the screen shut down state, whether a control command issued by a user through means other than the touch screen is executable.

4. The method according to claim 1, wherein, when the first distance does not satisfy the preset distance condition, the method further comprises:
enabling the touch screen of the mobile terminal.

5. The method according to claim 4, wherein, after the touch screen of the mobile terminal is enabled, the method further comprises:
resuming monitoring the first distance from the closest object to the touch screen of a mobile phone, and determining, when the first distance becomes satisfying the preset distance condition again, whether a time period during which the first distance keeps satisfying the preset distance condition reaches a preset first time period;
stopping the operation of monitoring in real time the first distance between the mobile terminal and the surroundings, if it is determined that the time period during which the first distance keeps satisfying the preset distance condition does not reach the preset first time period; and
shutting down the touch screen of the mobile terminal and disabling the touch screen, if it is determined that the time period during which the first distance keeps satisfying the preset distance condition reaches the preset first time period.

6. The method according to any one of claims 1 to 5, wherein, the preset distance condition specifically comprises:
the first distance is less than a preset second distance; or,
the first distance is less than or equals to the preset second distance.

7. An apparatus for preventing a misoperation, the apparatus being used after a mobile terminal enters an active state from a standby state, and the apparatus comprising:
a monitoring module, configured to monitor in real time a first distance between the mobile terminal and surroundings; and
a shutdown module, configured to shut down a touch screen of the mobile terminal and disable the touch screen when the first distance monitored by the monitoring module satisfies a preset distance condition.

8. The apparatus according to claim 7, wherein, the monitoring module is specifically configured to monitor in real time the first distance between a touch screen of the mobile terminal and a closest object in front of the touch screen.

9. The apparatus according to claim 7, wherein, the shutdown module specifically comprises:
a shutdown unit, configured to cause the mobile terminal to enter a screen shut down state predefined by an operation system of the mobile terminal, when the first distance monitored by the monitoring module satisfies the preset distance condition; and
a reporting unit, configured to report a reason of entering the screen shut down state to the operation system of the mobile terminal, so as to facilitate the operation system of the mobile terminal to determine, based on the reason of entering the screen shut down state, whether a control command issued by a user through means other than the touch screen is executable.

10. The apparatus according to claim 7, wherein, the apparatus further comprises:
an enabling module, configured to enable the touch screen of the mobile terminal when the first distance monitored by the monitoring module does not satisfy the preset distance condition.

11. The apparatus according to claim 10, wherein, the apparatus further comprises:
a determination module, configured to resume monitoring the first distance from the closest object to the touch screen of a mobile phone after the enabling module enables the touch screen of the mobile terminal, and to determine, when the first distance becomes satisfying the preset distance condition again, whether a time period during which the first distance keeps satisfying the preset distance condition reaches a preset first time period;
a stop module, configured to stop the operation of monitoring in real time the first distance between the mobile terminal and the surroundings, if the determination module determines that the time period during which the first distance keeps satisfying the preset distance condition does not reach the preset first time period; and
a notification module, configured to notify the shutdown module to perform operations of shutting down the touch screen of the mobile terminal and disabling the touch screen, if the determination module determines that the time period during which the first distance keeps satisfying the preset distance condition reaches the preset first time period.

12. The apparatus according to any one of claims 7 to 11, wherein, the preset distance condition specifically comprises:
the first distance is less than a preset second distance; or,
the first distance is less than or equals to the preset second distance.

13. A device, comprising:
a touch screen;
one or more processors;
a memory; and
one or more modules stored in the memory and configured to be executed by the one or more processors, wherein, the one or more modules have the following functions:
monitoring in real time a first distance between the device and surroundings; and
shutting down the touch screen and disabling the touch screen when the monitored first distance satisfies a preset distance condition.
